# EUROPEAN PATENT SPECIFICATION

(11) **EP 3 424 346 B1**
(45) Date of publication and mention of the grant of the patent: **27.12.2023**
(21) Application number: 17179283.1
(22) Date of filing: 03.07.2017
(51) Int. Cl.: A23L 5/20, A23D 9/02, C11B 3/10

(54) **REDUCTION OF THE CONTENT OF GLYCIDYL ESTERS IN EDIBLE OILS**
VERRINGERUNG DES GEHALTS VON GLYCIDYLESTERN IN SPEISEÖLEN
RÉDUCTION DE LA TENEUR EN ESTERS DE GLYCIDYLE DANS DES HUILES COMESTIBLES

(43) Date of publication of application: 09.01.2019
(73) Proprietor: Alfa Laval Corporate AB, 221 00 Lund (SE)
(72) Inventor: SARUP, Bent, DK-3480 FREDENSBORG (DK)
(74) Representative: Alfa Laval Attorneys

(56) References cited:
- EP-A1- 2 514 811
- WO-A1-2011/048083
- WO-A1-2015/174822
- US-A1- 2011 138 680
- US-A1- 2014 109 466
- US-B1- 6 638 551

## Description

### Technical field

The present application relates to a process of treating edible oil.

### Background art

3- and 2-monochloropropanediol (MCPD) and their fatty acid esters as well as glycidyl esters (GE) are contaminants in refined edible oils that are attracting increasing attention for their potential negative effects on human health. These contaminants are not present in the crude edible oil, but are formed during the refining process. While the system, the process and the use of the present application may be effective also for reducing the content of MCPDs and their fatty acid esters in edible oil, the present application targets on reducing the content of glycidyl esters of general structure (I), 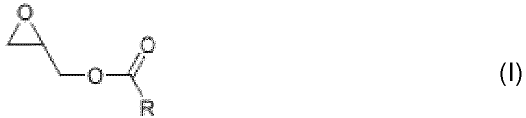 wherein R is the hydrocarbon end of a fatty acid, such as palmitic, stearic or oleic acid. GEs are considered to be potentially carcinogenic when hydrolyzed under the release of glycidol. Glycidol is on the IARC (International Agency for Research on Cancer) group 2A list of compounds that are probably cancerogenic. It is desirable to lower the GE content in edible oil as much as possible. For sensitive applications such as infant food, the desirable content of GEs is below 1 ppm, reported as glycidol. For very sensitive applications, or for the principal reason that compounds adverse to human health should not be added to food during its processing, it is requested to keep content of GEs below the present detection limit of about 0.1 ppm.

These contaminants are present in all refined or modified oils, but particularly high in palm oil. GEs are formed during high temperature deodorization of the edible oil from partial glycerides (monoglycerides, diglycerides), the formation accelerating at deodorization temperatures above 230 °C. Deodorization is a normal and necessary edible oil refining step, normally carried out in the 230-265 °C range. GEs may also form during fat modification processes. Levels of GEs of 20-30 ppm are not uncommon in a refined edible oil, and levels can be much higher.

US 2013/0323394 A1 relates to a process for the production of a refined oil having a reduced 3-MCPD ester and/or glycidyl ester content characterized in that it comprises a bleaching step followed by a deodorization step and that it comprises a mild final refining step, i.e. a final bleaching and/or deodorization step carried out under conditions which will limit the formation of undesirable substances.

US 2014/0148608 A1 discloses methods for reduction of the content of glycidol esters in edible oils. One method includes re-bleaching the oil.

It has thus been shown that the content of glycidyl esters can be reduced by re-bleaching the edible oil using a traditional slurry bleaching process and subsequently separating the bleaching earth from the oil on a filter, possibly followed by re-deodorization (typically at low temperature and/or of short duration, not to again form glycidyl esters). However, this approach involves high investment and running costs (bleachers, filters) as well as oil losses associated with the spent bleaching earth. Oil loss typically is about 35 % of the amount of bleaching earth used. If 0.2-0.5 wt% (relative to oil flow) of bleaching earth is used for reduction of the GE content by re-bleaching, the oil loss will accordingly be about 0.1-0.2 %, which in a 500 ton per day plant corresponds to a loss of 0.5-1 ton oil/day or about 125,000-250,000 USD/year at 330 operating days per year at a cost of 800 USD/ton oil lost in bleaching.

EP2514811, WO2011/048083, WO2015/174822, US6638551 and US20111380 show further prior art methods to treat oil.

### Summary of the invention

It is an object of the present invention to avoid the oil losses associated with suspended bleaching earth. It is another object of the present invention to eliminate the need for filters to take out suspended bleaching earth.

These objects as well as other objects of the invention, which should be apparent to a person skilled in the art after having studied the description below, are accomplished by a process of treating edible oil, as defined in the appended claim 1. Accordingly, the process comprises passing a deodorized oil from a deodorization section to a glycidyl ester conversion reactor, in which the edible oil is brought in contact with porous bodies comprising an acid epoxide conversion catalyst, the porous bodies having a size of larger than 0.5 mm.

The epoxide conversion catalyst facilitates conversion of epoxide bonds, e.g., by hydrolysis of an epoxide bond of a glycidyl ester in the presence of an acid catalyst. Such hydrolysis leads to the formation of monoacylglyceride. Monoacylglycerides are present in small amounts in all edible oils and pose no toxicity concern. Preferred epoxide conversion catalysts do, however, not contribute to a substantial extent to degradation of the edible oil, e.g., by acid hydrolysis of the triacylglyceride ester bond leading to the formation of diacylglyceride and fatty acid. Neither do preferred epoxide conversion catalysts contribute to a substantial extent to other unwanted side reactions affecting, e.g., taste or smell negatively. Epoxide conversion catalysts may be identified and evaluated using the procedures set out in the Examples below. Low formation of compounds that are undesirable from an organoleptic point of view when the oil is brought in contact with the epoxide conversion catalyst enables, as detailed below, subsequent deodorization or steam stripping to be performed under mild conditions.

The epoxide conversion catalyst comprises at least one of acidic clay, activated clay, acidic bleaching earth, activated bleaching earth, silica-alumina, alumina and gamma alumina. The epoxide conversion catalyst may preferably comprise at least one of silica-alumina, alumina and gamma alumina. The epoxide conversion catalyst may more preferably comprise silica-alumina.

It has been surprisingly found that the organoleptic properties of the edible oil are better after contacting the oil with an epoxide conversion catalyst consisting of silica-alumina or gamma alumina materials than after contacting it with an epoxide conversion catalyst consisting of clay/earth materials. The porous bodies may be free from clay and bleaching earth.

The epoxide conversion catalyst may have a ratio of silica (SiO₂) to alumina (Al₂O₃) in the range of 0.1 to 10, preferably 0.5 to 5, more preferably 0.5 to 2. At such ratios the catalyst may have an advantageous catalytically active acidity.

The porous bodies have a size of larger than 0.5 mm, preferably in the range of 0.5 to 10 mm, more preferably of larger than 1 mm, most preferably in the range of 1 to 5 mm. Herein, the "size" can be considered as the longest outside dimension of such a porous body. The porous bodies preferably comprise more than 75 percent by weight, more preferably more than 95 percent by weight of porous bodies that have the indicated size. Porous bodies of a smaller size than indicated may render a pressure drop in, eventually leading to plugging of, the vessel in which the edible oil is brought in contact with the porous bodies. Porous bodies of a larger size than indicated may render the inner surface of the porous bodies less accessible.

It has previously been observed by others that intraparticle diffusion in the pores can play a significant undesirable role in the adsorption and reaction phenomena on bleaching clays already with minute particle sizes in the order of 20 to 40 microns. It is therefore surprising that it is possible to reduce the glycidyl ester content effectively with bodies having a size of e.g. larger than 0.5 mm, corresponding to 500 microns.

The porous bodies may have a pore volume in the range of 0.1 to 2 cm³/g, preferably 0.5 to 1 cm³/g, more preferably 0.5 to 0.75 cm³/g. The porous bodies may have a % pore volume > 250 Å in the range of 5 to 50 %, preferably 10 to 30 %, more preferably 20 to 30 %. The porous bodies may have a meso pore peak in the range of 10 to 100 Å, preferably 20 to 80 Å, more preferably 20 to 40 Å. The porous bodies may have a specific surface in the range of 25 to 800 m²/g, preferably 100 to 500 m²/g.

The porous bodies may be shaped bodies. Herein, "shaped bodies" can be considered as bodies prepared by aggregation of smaller particles. Shaped bodies may typically be prepared by compacting or densifying particles of a material comprising or consisting of the epoxide conversion catalyst, optionally in mixture with another component such as a binder or a liquid, followed by forming of the shaped bodies by extrusion, pressing or granulation. The shaped bodies may subsequently be heat treated, such as by drying or calcination. The shaped bodies may be pellets, extrudates, tablets or granules.

The porous bodies or the shaped bodies may be of regular or irregular shapes, or a mixture thereof. Such shapes include cylinders, spheres, rings, trilobes and quattrolobes.

The edible oil may be brought into contact with the porous bodies at a temperature of 60 to 150 °C, preferably 80 to 120 °C, more preferably 90 to 110 °C. A lower reaction temperature contributes to a reduction of the glycidyl ester content of the edible oil to an acceptable level while also reducing formation of compounds that are undesirable from an organoleptic point of view.

For the purpose of this invention, the glycidyl ester content is analysed according to the AOCS (American Oil Chemists' Society) Official Method Cd 29b-13, revised 2015. This method reports the glycidyl ester content as glycidol in mg per kg oil, i.e. in parts per million by weight, herein abbreviated as ppm. The edible oil to be brought in contact with the porous bodies may comprise glycidyl esters. The edible oil to be brought in contact with the porous bodies may have a glycidyl ester content, reported as glycidol, in the range of 1 to 50 ppm, preferably 5 to 40 ppm, more preferably 20 to 30 ppm. The process described hereinabove may lead to reduction of the glycidyl ester content of the edible oil. The glycidyl ester content, reported as glycidol, of the edible oil after having been in contact with the porous bodies may be lower than 2 ppm, preferably lower than 1 ppm, more preferably lower than 0.5 ppm, most preferably lower than 0.1 ppm.

The edible oil may be selected from all kinds of edible fats and oils. The edible oil may comprise palm oil, soybean oil, canola or rapeseed oil, sunflower oil, palm kernel oil, cottonseed oil, groundnut oil, corn or maize oil, olive oil, rice bran oil, cocoa butter, coconut oil, safflower oil, animal fats, such as tallow, lard or fish oil, or mixtures thereof. The edible oil may preferably comprise palm oil.

The edible oil may, before being brought in contact with the porous bodies, be refined, such as deodorized or bleached, or modified, such as fractionated, hydrogenated or interesterified. The edible oil may typically be deodorized, preferably at a temperature above 230 °C, more preferably at a temperature in the range of 230 to 265 °C, before being brought in contact with the porous bodies. Furthermore, the edible oil may be chemically treated with acid and/or caustic and bleached before being deodorized or modified.

The edible oil may, after having been in contact with the porous bodies, be further refined, such as deodorized or steam stripped, preferably steam stripped, more preferably steam stripped by counter-current thin-film stripping. Steam stripping may thus serve as a final refining step. In particular, deodorization or steam stripping may remove volatiles, such as free fatty acids, smell and taste components. It is preferred to perform deodorization or steam stripping under mild conditions, i.e. for a short time or at a low temperature, thus reducing re-formation of glycidyl esters during deodorization or steam stripping. It is thus preferred to perform deodorization at a temperature in the range of 130 to 230 °C, preferably 180 to 220 °C and/or for a residence time in the range of 2 to 30 minutes, preferably 2 to 10 minutes. It is even more preferred to perform steam stripping by counter-current thin-film stripping for a residence time of 2 to 10 minutes at a temperature of 180 to 220 °C. In particular, low formation of compounds that are undesirable from an organoleptic point of view enables deodorization or steam stripping under mild conditions. Deodorization may also be performed at conventional temperatures in the range of 230 to 265 °C.

The glycidyl ester content, reported as glycidol, of the edible oil after such further refining may be lower than 2 ppm, preferably lower than 1 ppm, more preferably lower than 0.5 ppm, most preferably lower than 0.1 ppm.

The edible oil after having been in contact with the porous bodies, and optionally having been further refined, may be modified, such as fractionated, hydrogenated or interesterified.

The above-mentioned process may be performed by a system for treatment of edible oil, comprising a first treatment unit, selected from the group consisting of a deodorizer, a crystallizer, a hydrogenation reactor and an interesterification reactor, and a reaction vessel arranged to receive edible oil originating from the first treatment unit, wherein the reaction vessel comprises porous bodies comprising an epoxide conversion catalyst, the porous bodies having a size of larger than 0.5 mm, preferably in the range of 0.5 to 10 mm, more preferably of larger than 1 mm, most preferably in the range of 1 to 5 mm. Details about the edible oil, the porous bodies and the epoxide conversion catalyst etc. can be obtained from the above-described process of treating edible oil.

In particular, the porous bodies may be shaped bodies, such as pellets, extrudates, tablets or granules.

The system may further comprise a second treatment unit arranged to receive edible oil originating from the reaction vessel, wherein the second treatment unit is selected from the group consisting of a refining unit, such as a deodorizer or a steam stripper, preferably a steam stripper, more preferably a counter-current thin-film stripper.

The above-mentioned process may thus utilize porous bodies comprising an epoxide conversion catalyst, the porous bodies having a size of larger than 0.5 mm, preferably in the range of 0.5 to 10 mm, more preferably of larger than 1 mm, most preferably in the range of 1 to 5 mm, for treatment of edible oil. Details about the porous bodies, the epoxide conversion catalyst and the edible oil etc. can be obtained from the above-described process of treating edible oil.

### Brief description of the drawings

Fig. 1 represents a system according to the invention at the tail end of a deodorizing section.
Fig. 2 represents a system according to the invention integrated in an advanced deodorization section.

### Detailed description of preferred embodiments

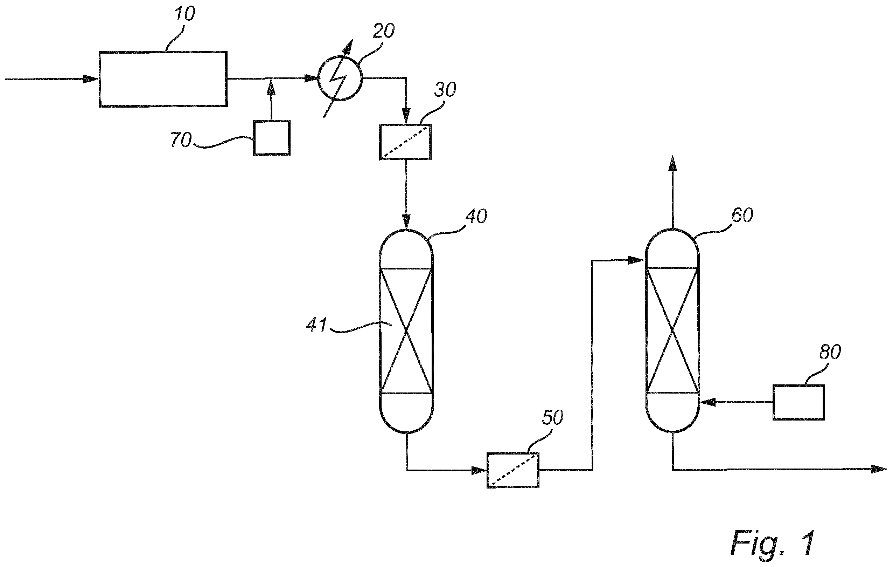

In Fig. 1, edible oil from a bleaching section (not shown) is passed to a deodorization section 10. Deodorized edible oil containing an elevated level of glycidyl esters exits the deodorization section 10 and is passed via a heat exchanger 20 and a pre-filter 30 to a glycidyl ester conversion reactor 40. Edible oil containing a reduced level of glycidyl esters exits the glycidyl ester conversion reactor 40 and is passed via a post-filter 50, re-heating to a suitable deodorization temperature (not shown) and a post-stripper 60 towards heat exchange economising (not shown), final cooling (not shown) and storage or packaging (not shown). Downstream a heat recovery step (not shown) of the deodorization section 10 the temperature of the oil coming from the deodorization section would typically be in the range of 120 to 140 °C. During such heat recovery step, or just after it, it is common practice to add about 20 ppm of citric acid to the oil, e.g. by means of a 100 ppm to 20 wt% aqueous solution of citric acid 70, to chelate metal traces and increase the stability of the oil during storage. The temperature of the water/oil mixture is adjusted in an economizer (not shown) and the heat exchanger 20 to the optimum reaction temperature, in the range of 60 to 150 °C, before entering the glycidyl ester conversion reactor 40. The glycidyl ester conversion reactor 40 contains a fixed bed 41 of porous bodies comprising an epoxide conversion catalyst. The oil is mildly steam stripped in the post-stripper 60, to which steam 80 is provided and from where off-gases are brought to a scrubber (not shown) and a vacuum system (not shown). Generally, pumps required for fluid transport are not shown.

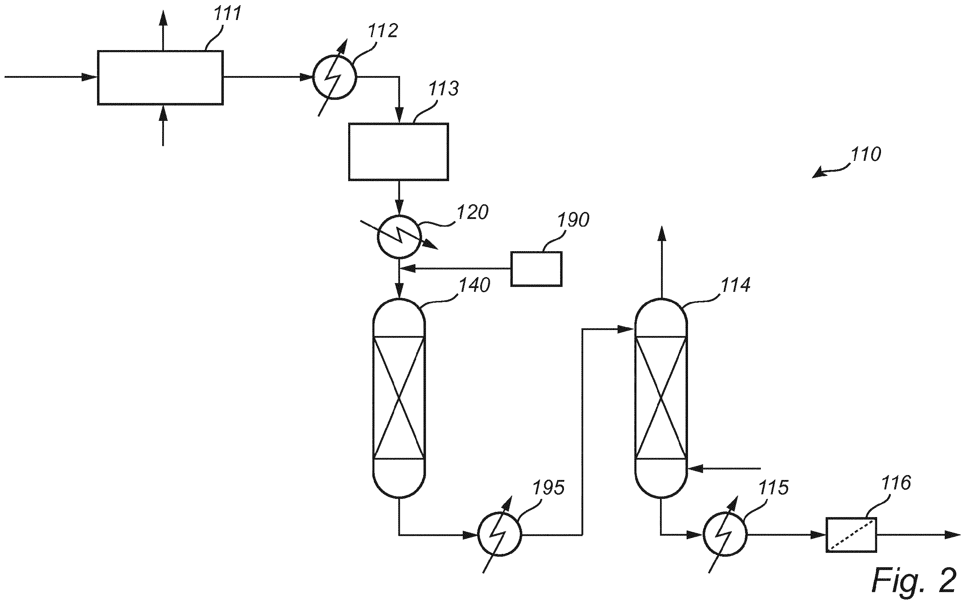

In Fig. 2, edible oil from a bleaching section (not shown) is passed through an advanced deodorization section 110. The advanced deodorization section 110 includes a deodorizer or pre-stripper 111 followed by a quench cooler 112 and a retention section 113. The oil is deodorized or pre-stripped in the deodorizer or pre-stripper 111, to which steam (not shown) is provided and from which off-gases are brought to a scrubber (not shown) and a vacuum system (not shown). Edible oil exiting the retention section 113 is passed via a heat exchanger 120 to a glycidyl ester conversion reactor 140. The glycidyl ester conversion reactor 140 contains a fixed bed of porous bodies comprising an epoxide conversion catalyst. The heat exchanger 120 provides the option of adjusting the temperature of the oil entering the glycidyl ester conversion reactor 140. An additional small amount of water 190 is added to the oil to drive hydrolysis of the glycidyl epoxides to a high conversion level. Edible oil exiting the glycidyl ester conversion reactor 140 is brought to post-stripping temperature in a re-heater 195, before being passed via a post-stripper 114, a heat recovery section 115 and a post-filter 116 of the advanced deodorizing section 110 towards final cooling (not shown) and storage or packing (not shown). The post-stripper 114 removes volatiles, such as free fatty acids and smell and taste components, from the edible oil. As shown, the glycidyl ester conversion reactor 140 and its accessories can conveniently be placed between the retention section 113 and the post-stripper 114 of the advanced deodorizing section 110. Generally, pumps required for fluid transport are not shown.

### Examples

In the examples reported below, the glycidyl ester content was analysed according to the AOCS (American Oil Chemists' Society) Official Method Cd 29b-13, revised 2015. This method reports the glycidyl ester content as glycidol in mg per kg oil, i.e. in parts per million by weight, herein abbreviated as ppm. The limit of quantification is 0.1 ppm.

The following porous materials were employed in the examples reported below.
- A1: Bleaching earth Tonsil^{®} 112FF
- A2: Bleaching earth Tonsil^{®} 215FF
- B: Gamma alumina
- C: Silica-alumina
- D: Aluminium hydroxide
- E: Gamma alumina
- F: Silica-alumina

Materials A1 and A2 were obtained from Clariant, Switzerland. Materials B to E were obtained from Haldor Topsoe A/S, Denmark.

Materials A1 and A2 are acid treated bleaching earths. Materials B, C, E and F are inherently acidic. Material D has no acidity.

The materials were employed in powder form suitable for suspension in oil as a slurry under agitation. Material C was additionally employed in form of pellets having a diameter of 1.6 mm and a length of 1 to 4 times the diameter. The pellets were prepared from the powder of material C by addition of a binder, extrusion of the mixture of powder and binder, and subsequent calcination of the extruded pellets. Further properties of the materials are provided, as specified by the supplier, in the table below (n/a = not available).

| Material | Pore volume (cm³/g) | % Pore volume > 250 Å | Meso pore peak (Å) |
|---|---|---|---|
| A1 | n/a | n/a | n/a |
| A2 | 0.38 | 30 % | n/a |
| B | 0.5-1 | 20 % | 30-80 |
| C | 0.5-0.75 | 20-30 % | 26-36 |
| D | 0.3-0.5 | 20-30 % | 30-80 |
| E | 0.5-1 | 10% | 30-80 |
| F | 0.5-1 | 20 % | 30-80 |

| Material | Specific area BET (m²/g) | Ratio SiO₂ / Al₂O₃ |
|---|---|---|
| A1 | 180 | 7.1 |
| A2 | 230 | 4.6 |
| B | 200-450 | 0 |
| C | 200-450 | 0.9-1.3 |
| D | 200-450 | - |
| E | 200-450 | 0 |
| F | 200-450 | 2.0-2.5 |

### Example 1. Screening for glycidyl epoxide conversion activity

Materials A1, A2, B, C, D and E, all in powder form, were screened for glycidyl epoxide conversion activity. Refined oil (palm olein) was treated by addition of 0.5 wt% of the respective material and mixing for 45 min at 110 °C. Subsequently the slurry was filtered and oil was withdrawn for analysis.

Considering the glycidyl ester content of the palm olein before and after treatment, it was found that A1, A2 and C had the same high glycidyl epoxide conversion activity, whereas B and E showed medium activity and D no activity.

An indicative taste panel test was conducted (4 participants), giving marks for bland smell and taste. Higher marks being given for a blander smell and taste, the results were untreated refined oil > oil treated with B, C, D or E > materials treated with A1 or A2. These results suggested that fewer undesirable side-reactions appear to take place with the alternatives to conventional bleaching earth or, in other words, that less post-treatment appears to be required for such alternatives.

We therefore concluded that it is possible to find alternatives to bleaching earth for high conversion of glycidyl epoxides.

### Example 2. Performance of epoxide conversion catalyst bodies

A pilot plant was established operating on a side stream from an industrial unit producing refined, bleached and deodorized palm olein. The pilot plant as well as the industrial unit was manufactured from stainless steel 316. Oil at a temperature of about 120 °C came from a heat recovery step (vacuum heat exchanger, VHE, operated under gravity flow and simultaneous agitation and steam addition) in the deodorization section of the industrial unit. In the VHE 100 ppm citric acid solution had been added to the oil. A side stream was withdrawn at a pressure of about 3.6 barg and sent to a 10 micron bag filter for collection of particles (such as undissolved citric acid or citric acid chelated metals), in this way protecting the subsequent catalyst bed. The temperature of the withdrawn oil was increased to a temperature of 140 °C by an in-line heating element. A needle valve was used to control the flow rate. The oil then entered a reactor with a diameter of 56 mm and a height of 1000 mm. 1.3 kg of porous bodies of material C, formed as 1.6 mm diameter extruded cylinders, were loaded in the reactor.

At 140 °C and a flow rate of 2.6 litres of oil per hour, no glycidyl esters could be detected in the product oil (i.e. glycidyl ester content was below detection limit of 0.1 ppm, reported as glycidol). Furthermore, no significant increase was observed in the free fatty acid level. Even when the oil flow rate was increased to 15 litres of oil per hour, still at 140 °C, no glycidyl esters could be detected. Neither could any significant increase in free fatty acid level be detected. With a density of the oil of about 0.85 kg/litre, the latter reaction conditions correspond to an oil/catalyst ratio of 15*0.85/1.3 = 10.

The usual consumption of bleaching clay in conventional slurry treatment of oil is in the range of 0.1-0.5 wt% of the treated oil. With the demonstrated ability to process 10 kg oil/kg catalyst per hour, we only need to process 200 kg oil (i.e. operate for 20 hours) to reach break-even with a 0.5 wt% bleaching earth operation or to process 1000 kg oil (i.e. operate for 100 hours) to reach break-even with a 0.1 wt% bleaching earth operation.

Some smell and taste changes were noted for the treated oil. It cannot be excluded that some of the changes come from overheating the oil due to an imperfect heater used, periods of non-operation where the oil has had long residence time in contact with hot metal surfaces, and/or long eluation times for such destroyed oil. Such smell and taste changes were, however, expected to be dealt with in a subsequent mild steam stripping processing step.

### Example 3. Organoleptic properties of rapeseed oil

Materials A2 (powder), C (powder and pellets with a diameter of 1.6 mm) and F (powder) were tested to compare impact on smell and taste of refined rapeseed oil. The test procedure was as follows.
1. Take about 90 grams (100 ml) of refined rapeseed oil.
2. Heat to about 100 °C in a micro-wave oven and maintain temperature on a heating plate.
3. Dose 0.2 % water under agitation.
4. Dose 0.5 % of powder material (A2, C, F); or 5 % of pellet material (C) under agitation.
5. Keep stirring for about 20 minutes.
6. Filter and re-filter the mixture on filter paper equipped on Buchner funnel placed on top of vacuum flask.
7. Collect filtered oil in 100 ml plastic bottle.
8. Heat filtered oil to about 40 °C on water bath and test for smell and taste (panel test with 5 participants).

Untreated refined rapeseed oil was considered as a reference sample having a bland smelling and an acceptable taste. Oil treated with material A2 was smelling and tasting bad. Oils treated with material C (powder or pellets) or F came out almost equal, having a better taste and smell than oil treated with material A2 but not as good as the reference sample. Oil treated with material C (pellets) was relatively bland in taste, though not neutral. Oil treated with material F did exhibit a slightly different smell compared to oils treated with material C (powder or pellets).

It was considered likely that mild deodorisation of oils treated with material C (powder or pellets) or F should easily and efficiently remove contained odoriferous compounds.

### Example 4. Glycidyl epoxide conversion and subsequent deodorization

For a semi-industrial demonstration, a catalyst in the form of a silica-alumina with an acidic catalytic function (material C) was selected. It was used as porous, extruded pellets, with a pellet diameter of 1/16 inch (1.6 mm). 47.5 kg catalyst was loaded in a fixed bed reactor. Bleached and deodorized palm oil with a glycidyl ester content of 3.4 ppm was fed to the reactor at a feed rate of 1 ton/hour at 110 °C. It was found that the glycidyl ester content in the treated oil was 0.14 ppm, reported as glycidol. A total of 25 tons of palm oil was treated in this way and accumulated in a tank. Samples of the oil withdrawn after the reactors showed unacceptable organoleptic properties (taste, smell).

Subsequently the accumulated oil was fed to a batch deodorizer. Deodorization took place at 220 °C for 40 minutes. After deodorization the organoleptic properties were found to fulfil the product requirement in a panel test. The glycidyl ester content was 0.37 ppm, reported as glycidol, after the deodorization.

## Claims

1. A process of treating an edible oil comprising passing a deodorized oil from a deodorization section to a glycidyl ester conversion reactor (40; 140), in which the edible oil is brought in contact with a fixed bed of porous bodies comprising an acid epoxide conversion catalyst comprising at least one of acidic clay, activated clay, acidic bleaching earth, activated bleaching earth, silica-alumina, alumina and gamma alumina, the porous bodies having a size of larger than 0.5 mm.

2. The process according to claim 1, wherein the acid epoxide conversion catalyst comprises at least one of silica-alumina, alumina and gamma alumina.

3. The process according to claim 1 or 2, wherein the acid epoxide conversion catalyst comprises silica-alumina.

4. The process according to any one of the preceding claims, wherein the edible oil is brought in contact with the porous bodies at a temperature in the range of 60 to 150 °C, preferably 80 to 120 °C, more preferably 90 to 110 °C.

5. The process according to any one of the preceding claims, wherein the edible oil to be brought in contact with the porous bodies has a glycidyl ester content, reported as glycidol, in the range of 1 to 50 ppm, preferably 5 to 40 ppm, more preferably 20 to 30 ppm.

6. The process according to any one of the preceding claims, wherein the edible oil comprises palm oil, soybean oil, canola or rapeseed oil, sunflower oil, palm kernel oil, cottonseed oil, groundnut oil, corn or maize oil, olive oil, rice bran oil, cocoa butter, coconut oil, safflower oil, animal fats, such as tallow, lard or fish oil, or mixtures thereof, preferably palm oil.

7. The process according to any one of the preceding claims, wherein the edible oil after having been in contact with the porous bodies is further refined, such as deodorized or steam stripped, preferably steam stripped, more preferably steam stripped by counter-current thin-film stripping.

## Patentansprüche

1. Verfahren zum Behandeln eines verzehrbaren Öls, umfassend das Führen eines desodorierten Öls von einem Desodorierungsabschnitt zu einem Glycidylesterumwandlungsreaktor (40, 140), in dem das verzehrbare Öl in Kontakt mit einem Festbett von porösen Körpern gebracht wird, die einen sauren Epoxidumwandlungskatalysator umfassen, der mindestens eines von saurem Ton, aktiviertem Ton, saurer Bleicherde, aktivierter Bleicherde, Siliciumoxid-Aluminiumoxid, Aluminiumoxid und Gamma-Aluminiumoxid umfasst, wobei die porösen Körper eine Größe von mehr als 0,5 mm aufweisen.

2. Verfahren nach Anspruch 1, wobei der saure Epoxidumwandlungskatalysator mindestens eines von Siliciumoxid-Aluminiumoxid, Aluminiumoxid und Gamma-Aluminiumoxid umfasst.

3. Verfahren nach Anspruch 1 oder 2, wobei der saure Epoxidumwandlungskatalysator Siliciumoxid-Aluminiumoxid umfasst.

4. Verfahren nach einem der vorhergehenden Ansprüche, wobei das verzehrbare Öl mit den porösen Körpern bei einer Temperatur im Bereich von 60 bis 150 °C, bevorzugt 80 bis 120 °C, noch bevorzugter 90 bis 110 °C in Kontakt gebracht wird.

5. Verfahren nach einem der vorhergehenden Ansprüche, wobei das verzehrbare Öl, das mit den porösen Körpern in Kontakt gebracht werden soll, einen Glycidylestergehalt, als Glycidol angegeben, im Bereich von 1 bis 50 ppm, bevorzug 5 bis 40 ppm, noch bevorzugter 20 bis 30 ppm aufweist.

6. Verfahren nach einem der vorhergehenden Ansprüche, wobei das verzehrbare Öl Palmöl, Sojabohnenöl, Rübenkohl- oder Rapsöl, Sonnenblumenöl, Palmkernöl, Baumwollsamenöl, Erdnussöl, Maisöl, Olivenöl, Reiskleieöl, Kakaobutter, Kokosnussöl, Safloröl, tierische Fette wie Talg, Schmalz oder Fischöl oder Mischungen davon, bevorzugt Palmöl umfasst.

7. Verfahren nach einem der vorhergehenden Ansprüche, wobei das verzehrbare Öl, nachdem es in Kontakt mit den porösen Körpern gewesen ist, noch weiter raffiniert, wie beispielsweise desodoriert oder dampfgestrippt, bevorzugt dampfgestrippt, noch bevorzugter durch Gegenstrom-Dünnschichtstrippen dampfgestrippt wird.

## Revendications

1. Procédé de traitement d'une huile comestible comprenant le passage d'une huile désodorisée depuis une section de désodorisation vers un réacteur de conversion d'ester de glycidyle (40 ; 140), dans lequel l'huile comestible est mise en contact avec un lit fixe de corps poreux comprenant un catalyseur de conversion d'époxyde acide comprenant au moins l'une d'une argile acide, argile activée, argile décolorante acide, argile décolorante activée, silice-alumine, alumine et gamma alumine, les corps poreux ayant une taille supérieure à 0,5 mm.

2. Procédé selon la revendication 1, le catalyseur de conversion d'époxyde acide comprenant au moins une parmi la silice-alumine, l'alumine et la gamma alumine.

3. Procédé selon la revendication 1 ou 2, le catalyseur de conversion d'époxyde acide comprenant de la silice-alumine.

4. Procédé selon l'une quelconque des revendications précédentes, l'huile comestible étant mise en contact avec les corps poreux à une température située dans la plage de 60 à 150°C, préférablement de 80 à 120°C, plus préférablement de 90 à 110°C.

5. Procédé selon l'une quelconque des revendications précédentes, l'huile comestible à mettre en contact avec les corps poreux ayant une teneur en ester de glycidyle, indiquée comme glycidol, située dans la plage de 1 à 50 ppm, préférablement de 5 à 40 ppm, plus préférablement de 20 à 30 ppm.

6. Procédé selon l'une quelconque des revendications précédentes, l'huile comestible comprenant l'huile de palme, l'huile de soja, l'huile de canola ou de colza, l'huile de tournesol, l'huile de palmiste, l'huile de graines de coton, l'huile d'arachide, l'huile de maïs, l'huile d'olive, l'huile de son de riz, le beurre de cacao, l'huile de noix de coco, l'huile de sésame, les graisses d'origine animale, telles que le suif, le lard ou la graisse de poisson, ou les mélanges de ceux-ci, préférablement l'huile de palme.

7. Procédé selon l'une quelconque des revendications précédentes, l'huile comestible après avoir été en contact avec les corps poreux étant davantage raffinée, tel que désodorisée ou strippée à la vapeur, préférablement strippée à la vapeur, plus préférablement strippée à la vapeur par un stripage sur film fin à contre-courant.
